# EUROPÄISCHE PATENTSCHRIFT

(11) **EP 0 743 476 B1**
(45) Veröffentlichungstag und Bekanntmachung des Hinweises auf die Patenterteilung: **17.09.1997**
(21) Anmeldenummer: 96102214.2
(22) Anmeldetag: 15.02.1996
(51) Int. Cl.: F16K 3/314, F16K 3/316, F16K 3/02

(54) **Ventilanordnung**
Valve arrangement
Dispositif de vanne

(30) Priorität: 19.05.1995 DE 19518429
(43) Veröffentlichungstag der Anmeldung: 20.11.1996
(73) Patentinhaber: EMERSON ELECTRIC GmbH & Co., D-71332 Waiblingen (DE)
(72) Erfinder: Maurer, Rainer, D-70176 Stuttgart (DE); Reisinger, Ludwig, D-71336 Waiblingen (DE)
(74) Vertreter: Manitz, Gerhart, Dr. Dipl.-Phys.

(56) Entgegenhaltungen:
- US-A- 3 533 598

## Beschreibung

Die vorliegende Erfindung betrifft eine Ventilanordnung, insbesondere elektronische Expansionsventilanordnung, für pneumatische oder hydraulische Druckmittel mit einem Ventilgehäuse, das einen ersten und einen zweiten Druckmittelanschluß aufweist, die miteinander durch einen in einem Gehäusehohlraum gebildeten Durchflußraum verbunden sind, und einem im Ventilgehäuse angeordneten und mit einem Ventilsitz zusammenwirkenden Schieberelement, wobei das Schieberelement mit einem Stellelement eines Antriebs wirkverbunden und parallel zu dem Ventilsitz zwischen einer Schließstellung, in der eine Anlagefläche des Schieberelements eine von dem Ventilsitz gebildete Durchflußöffnung verschließt, und einer nungsstellung, in der ein in dem Schieberelement ausgebildeter Durchflußkanal die Durchflußöffnung freigibt, verschiebbar geführt ist, und wobei das Schieberelement in Richtung des Ventilsitzes und zurück verschiebbar ist.

Bei einer Ventilanordnung dieser Art, die aus der US-PS 3,533,598 bekannt ist, ist das Schieberelement zwischen der Abtriebswelle eines Motors und einer Spindel, die in eine im Boden des Ventilgehäuses vorgesehende Sackbohrung eingreift und in dieser in Längsrichtung verschiebbar und angeordnet ist, gehalten, wobei das Schieberelement gegenüber der Abtriebswelle und der Spindel in Richtung des Ventilsitzes und zurück verschiebbar ist, um einen Achsversatz zwischen der Abtriebswelle und der Spindel auszugleichen.

Die bekannte Ventilanordnung ist in der Herstellung aufwendig, da eine achsparallele Ausrichtung zwischen Abtriebswelle und Spindel für eine einwandfreie Funktion erforderlich ist, so daß die Bauteile sehr genau gefertigt werden müssen.

Außerdem wird es häufig als nachteilig empfunden, daß das Schieberelement der bekannten Ventilanordnung nur schwer auszuwechseln ist, da hierzu die Abtriebswelle aus dem Ventilgehäuse ausgebaut werden muß.

Die Aufgabe der Erfindung ist es, eine Ventilanordnung der eingangs genannten Art zu schaffen, die einfach und preiswert in der Herstellung ist und eine einfache Montage und Demontage des Schieberelements gewährleistet.

Diese Aufgabe ist im wesentlichen dadurch gelöst, daß das Schieberelement in einem an dem Stellelement angebrachten oder gehaltenen Rahmen angeordnet und gegenüber dem Rahmen um wenigstens zwei Achsen kippbar ist.

Erfindungsgemäß bilden der Rahmen und das Schieberelement eine vormontierbare Einheit, die an dem Stellelement des Antriebs befestigbar ist. Durch die erfindungsgemäß vorgesehenen Verstellmöglichkeiten des Schieberelements gegenüber dem Rahmen kann bei geeigneter Auswahl der Kippachsen das Schieberelement auf einfache Weise in seine vorgesehene Position und Lage an dem Ventilsitz gebracht werden.

In vorteilhafter Weise kann zur Anbringung des Rahmens an dem Stellelement in dem Ventilgehäuse ein Druckfederelement vorgesehen sein, das den Rahmen gegen das Stellelement drückt und an dem Stellelement hält. Durch diese Anordnung wird ein besonders schnelles Auswechseln des Rahmens ermöglicht, da der Rahmen lediglich in dem Ventilgehäuse zwischen dem Druckfederelement und dem Stellelement positioniert zu werden braucht und dann durch die Federkraft des Druckfederelements ohne weitere Fixierungen gehalten wird.

Gemäß einer bevorzugten Anordnung besteht der Rahmen zumindest bereichsweise aus einem elastischen Material, so daß das Schieberelement in dem Rahmen durch die Federkraft des elastischen Materials gehalten werden kann, und ist das Schieberelement in dem Rahmen an seinen in der Verstellrichtung des Schieberelements gegenüberliegenden Seiten durch Wälzkörper bzw. Gleitelemente gelagert und geführt. Durch diese Anordnung wird gewährleistet, daß das Schieberelement auf einfache Weise und ohne aufwendige Fixiermittel an dem Rahmen befestigt und gelagert werden kann und das Schieberelement insbesondere auch schnell ausgewechselt werden kann, ohne den Rahmen von der Stelleinrichtung lösen zu müssen.

Gemäß einer weiteren Ausgestaltung der erfindungsgemäßen Ventilanordnung ist das Schieberelement zwischen dem Ventilsitz und einem im Ventilgehäuse dem Ventilsitz gegenüberliegend angeordneten Führungselement geführt, wobei das Führungselement in Richtung des Ventilsitzes bewegbar und durch ein ortsfest an dem Ventilgehäuse angeordnetes Federelement oder ein anderes geeignetes Mittel in Richtung des Ventilsitzes vorgespannt ist und das Schieberelement gegen den Ventilsitz drückt. Durch diese Ausbildung wird erreicht, daß das Schieberelement an dem Ventilsitz unter Druck gehalten wird und somit eine exakte Führung des Schieberelements sichergestellt ist. Im einfachsten Fall kann das Führungselement beispielsweise eine Kugel sein, die punktuell an dem Schieberelement anliegt.

Gemäß einer weiteren Ausführungsform ist vorgesehen, die Druckmittelanschlüsse in der Verstellrichtung des Schieberelements versetzt an dem Ventilgehäuse vorzusehen und zwischen dem ersten Druckmittelanschluß und dem Durchflußraum in dem Ventilgehäuse einen den Durchflußraum umgebenden Ringraum auszubilden, der mit dem Durchflußraum durch zwei einander diametral gegenüberliegende Verbindungsöffnungen verbunden ist, wobei der Ventilsitz und das Führungselement an den Verbindungsöffnungen vorgesehen sind und wobei an dem Führungselement ein weiterer mit dem Schieberelement zusammenwirkende Ventilsitz ausgebildet ist. Bei dieser Anordnung strömt ein Druckmittel gleichzeitig durch die sich gegenüberliegenden Verbindungsöffnungen von dem Ringraum in den Durchflußraum oder umgekehrt, so daß sich die Reibungskräfte, die während dieses Strömungsvorgangs auftreten, gegenseitig aufheben. Hierdurch wird eine besonders gleichmäßige Belastung der an den Verbindungsöffnungen vorgesehenen Ventilsitze erreicht.

Hinsichtlich vorteilhafter Ausgestaltungen und Weiterbildungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: eine erste Ausführungsform einer Ventilanordnung gemäß der Erfindung im Längsschnitt;
- Figur 2: eine zweite Ausführungsform einer erfindungsgemäßen Ventilanordnung im Längsschnitt;
- Figur 3: eine dritte Ausführungsform einer erfindungsgemäßen Ventilanordnung im Längsschnitt;
- Figur 4: eine vierte Ausführungsform einer erfindungsgemäßen Ventilanordnung im Längsschnitt.

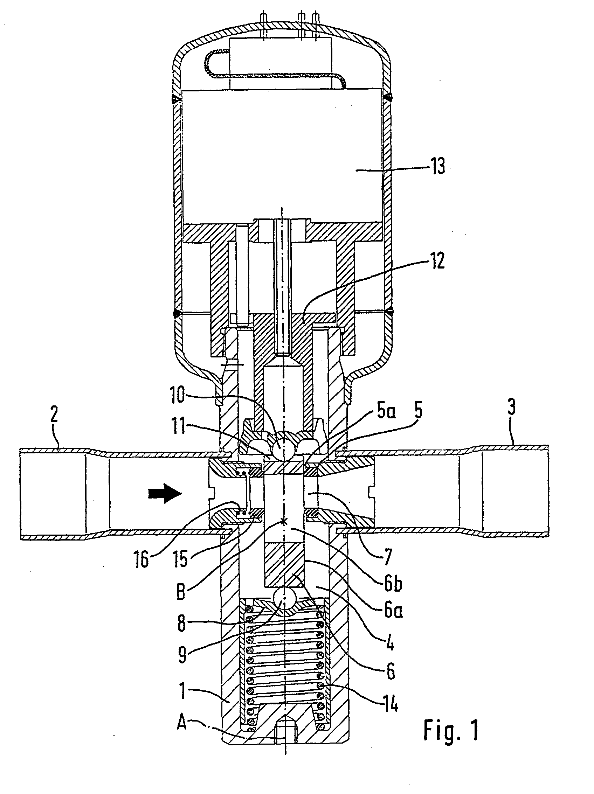

Die Figur 1 zeigt eine erste Ausführungsform einer erfindungsgemäßen Ventilanordnung. Zu der Ventilanordnung gehört ein Ventilgehäuse 1, an dem einander diametral gegenüberliegend ein erster Druckmittelanschluß 2 und ein zweiter mittelanschluß 3 vorgesehen sind, die miteinander durch einen in einem Gehäusehohlraum gebildeten Durchflußraum 4 verbunden sind.

In dem Ventilgehäuse 1 ist ein mit einem Ventilsitz 5a zusammenwirkendes Schieberelement 6 vorgesehen, das in dem Ventilgehäuse 1 parallel zu dem Ventilsitz 5a geführt zwischen einer Schließstellung, in der eine Anlagefläche 6a des Schieberelements 6 eine von dem Ventilsitz 5a gebildete Durchflußöffnung 7 verschließt, und einer Öffnungsstellung, in der ein in dem Schieberelement 6 ausgebildeter Durchflußkanal 6b die Durchflußöffnung 7 freigibt, verschiebbar ist.

Das Schieberelement 6 ist in einem Rahmen 8 aus elastischem Material gehalten und gegenüber dem Rahmen 8 bewegbar. Zur Lagerung des Schieberelements 6 in dem Rahmen 8 sind zwischen den in Verstellrichtung des Schieberelements 6 gegenüberliegenden Stirnflächen des Schieberelements 6 und dem Rahmen 8 als Kugeln 9, 10 ausgebildete Wälzkörperelemente vorgesehen. Die Kugeln 9, 10 sind einander gegenüberliegend in dem Rahmen 8 gehalten und laufen in Führungen 11 des Schieberelements 6, die senkrecht zur Anlagefläche 6a ausgerichtet sind.

Anstelle von Wälzkörpern können auch entsprechende Gleitelemente vorgesehen sein.

Durch diese Ausgestaltung des Schieberelements 6 an dem Rahmen 8 ist das Schieberelement 6 gegenüber dem Rahmen 8 in Richtung des Ventilsitzes 5a und zurück verschiebbar, und außerdem kann das Schieberelement 6 Kippbewegungen um eine durch die Mittelpunkte der Kugeln 9, 10 verlaufende Achse A sowie eine senkrecht zu dieser Achse A und parallel zu der Anlagefläche 6a liegende weitere Achse B ausführen.

Somit kann das Schieberelement 6 gegenüber dem Rahmen 8 alle Bewegungen ausführen, die zur genauen Positionierung und Ausrichtung des Schieberelements 6 gegenüber dem Ventilsitz 5a erforderlich sind.

Der Rahmen 8 ist zwischen einem in der Verstellrichtung des Schieberelements 6 bewegbaren Stellelement 12 eines an dem Ventilgehäuse 1 angebrachten Antriebs 13 und einem in dem Ventilgehäuse 1 gehaltenen Druckfederelement 14, welches sich an dem Ventilgehäuse 1 abstützt und den Rahmen in der Verstellrichtung des Verschieberelements 6 gegen das Stellelement 12 drückt, gehalten. Bei einer Betätigung des Antriebs 13 wird das Schieberelement 6 durch das Stellelement 12 entgegen der Federkraft des Druckfederelements 14 in Richtung des Druckfederelements 14 bewegt, und bei einer Betätigung des Stellelements in umgekehrter Richtung wird das Schieberelement 6 durch das Druckfederelement 14 in Anlage an dem Stellelement 12 gehalten.

Durch diese Anordnung ist es auf einfache und schnelle Weise möglich, den Rahmen 8 zusammen mit dem Schieberelement 6 auszuwechseln, da keine feste Verbindung zwischen dem Stellelement 12 und dem Rahmen 8 besteht.

Außerdem wird durch das Druckfederelement 14 das Schieberelement 6 automatisch in seine Schließstellung überführt, wenn der Motor des Antriebs 13 beispielsweise bei einem Stromausfall außer Betrieb gesetzt wird.

Der Rahmen 8 kann auch aus zwei gegeneinander verstellbaren Rahmenteilen gebildet sein, zwischen denen das Schieberelement 6 durch die Federkraft des Druckfederelements 14 gehalten ist.

Zur Führung des Schieberelements 6 in dem Ventilgehäuse 1 ist das Schieberelement 6 zwischen dem Ventilsitz 5a und einem dem Ventilsitz 5a gegenüberliegend im Ventilgehäuse 1 vorgesehenen Führungselement 15 angeordnet. Das Führungselement 15 ist in Richtung des Ventilsitzes 5a gegenüber dem Ventilgehäuse 1 verstellbar geführt und durch ein Federelement 16 in Richtung des Ventilsitzes 5a vorgespannt, so daß das Führungselement 15 durch die Federkraft des Federelements 16 das Schieberelement 6 gegen den Ventilsitz 5 drückt. Dabei kann sich das Schieberelement 6 gegenüber dem Rahmen 8 im wesentlichen frei bewegen und so eine exakte Lage gegenüber dem Ventilsitz 5a einnehmen.

Das Schieberelement 6 sowie die Ventilsitz- und Führungselemente 5, 15 bestehen aus einem chemisch resistenten Material mit hohen Gleiteigenschaften und einem hohen Abriebswiderstand, insbesondere aus einem Keramikmaterial.

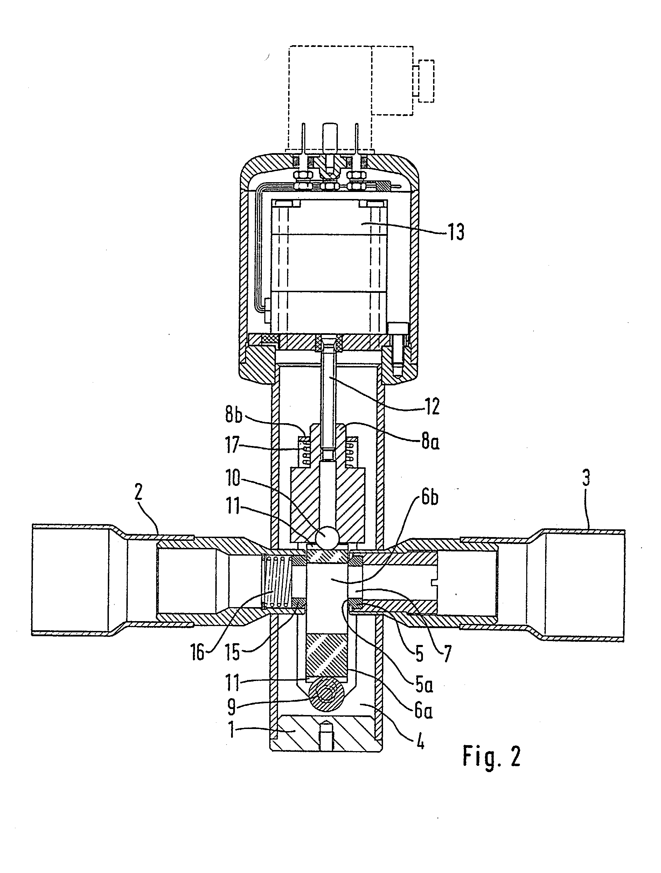

Die in der in Figur 2 gezeigte zweite Ausführungsform einer Ventilanordnung ist in ähnlicher Weise wie die in Figur 1 gezeigte Ventilanordnung ausgebildet und umfaßt ein Ventilgehäuse 1 mit einem ersten Druckmittelanschluß 2 und einem dem ersten Druckmittelanschluß 2 diametral gegenüberliegend angeordneten zweiten Druckmittelanschluß 3. In dem Ventilgehäuse 1 ist ein Schieberelement 6 verstellbar angeordnet und zwischen einem an dem gehäuseseitigen Ende des zweiten Druckmittelanschlusses 3 ausgebildeten Ventilsitz 5a und einem dem Ventilsitz 5 gegenüberliegenden Führungselement 15 geführt. Das Führungselement 15 ist in Richtung des Ventilsitzes 5a bewegbar.und durch ein Federelement 16 vorgespannt.

Das Schieberelement 6 ist in einem Rahmen 8 angeordnet, der von einem mit dem Stellelement 12 eines Antriebs 13 verbundenen ersten Rahmenteil 8a und einem an dem ersten Rahmenteil 8a angebrachten und gegenüber diesem in Verstellrichtung des Schieberelements 6 bewegbar geführten zweiten Rahmenteil 8b gebildet wird. Das Schieberelement 6 liegt zwischen den beiden Rahmenteilen 8a, 8b und wird durch die Federkraft eines Federelements 17, welches sich zwischen dem ersten Rahmenteil 8a und dem zweiten Rahmenteil 8b abstützt, gehalten.

In dem Rahmen 8 ist das Schieberelement 6 durch in dem ersten Rahmenteil 8a und dem zweiten Rahmenteil 8b gehaltene Wälzkörper 9, 10 gelagert und senkrecht zu der Anlagefläche 6a des Schieberelements 6 verschiebbar geführt. Hierdurch kann das Schieberelement 6 Schwenkbewegungen gegenüber dem Rahmen 8 um eine durch die Mittelpunkte der Wälzkörper 9, 10 verlaufende Achse A sowie um eine senkrecht zu dieser Achse A und parallel zu der Anlagefläche 6a liegende weitere Achse B ausführen und außerdem verschoben werden. Damit ist das Schieberelement 6 im wesentlichen frei gegenüber dem Rahmen 8 und somit auch gegenüber dem Ventilsitz 5a einstellbar.

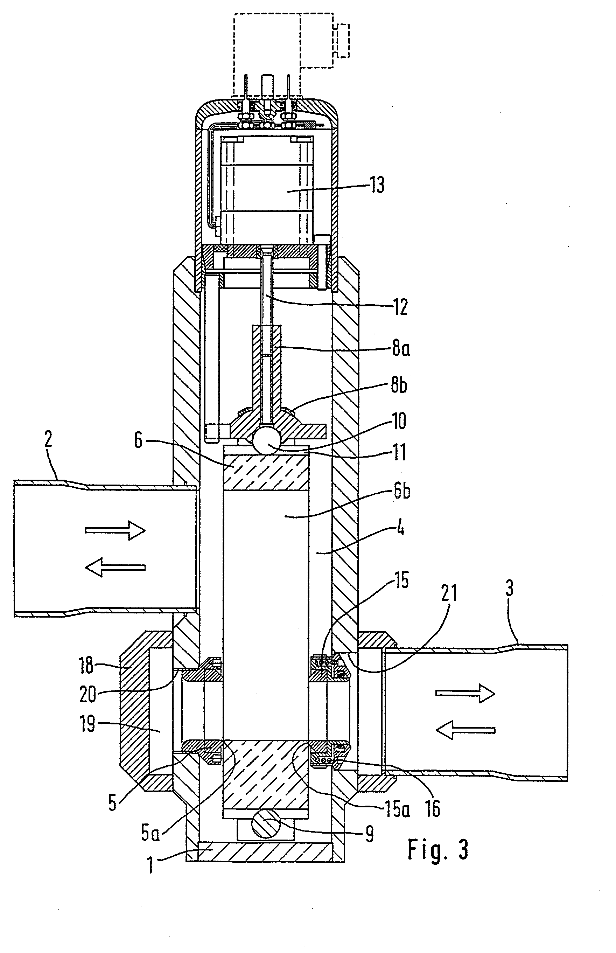

In Figur 3 ist eine dritte Ausführungsform einer erfindungsgemäßen Ventilanordnung mit einem in einem Rahmen 8 beweglich angeordneten und durch einen Antrieb 13 verstellbaren Schieberelement 6 dargestellt.

Bei dieser Ventilanordnung ist der Rahmen 8 ebenso wie bei der in Figur 2 dargestellten Ausführungsform zweiteilig ausgebildet und besteht aus einem mit dem Stellelement 12 des Antriebs 13 verbundenen ersten Rahmenteil 8a und einem an dem ersten Rahmenteil 8a angebrachten und gegenüber diesem in der Verstellrichtung des Schieberelements 6 bewegbar geführten zweiten Rahmenteil 8b.

Während bei der in Figur 2 dargestellten Ausführungsform zwischen den Rahmenteilen 8a, 8b ein Federelement 17 vorgesehen ist, durch deren Federkraft das Schieberelement 6 zwischen den Rahmenteilen 8a, 8b gehalten wird, besteht bei der in Figur 3 gezeigten Ventilanordnung das zweite Rahmenteil 8b aus einem elastischen Material und ist auf Zug vorgespannt, um das Schieberelement 6 zwischen Rahmenteilen 8a und 8b zu halten.

Die Druckmittelanschlüsse 2, 3 sind in der Verstellrichtung des Schieberelements 6 versetzt an dem Ventilgehäuse 1 angeordnet, wobei der zweite Druckmittelanschluß 3 gehäuseseitig in eine um das Ventilgehäuse 2 herum einen Ringraum 19 bildende Gehäuseerweiterung 18 mündet. Der Ringraum 19 ist mit dem Durchflußraum 4 in dem Ventilgehäuse 1 durch zwei Verbindungsöffnungen 20, 21, die in dem Ventilgehäuse 1 an diametral gegenüberliegenden Seiten vorgesehen sind, verbunden. An den Verbindungsöffnungen 20, 21 sind jeweils mit dem Schieberelement 6 zusammenwirkende Ventilsitze 5a, 15a vorgesehen. Einer der Ventilsitze 15a ist an einem Führungselement 15 ausgebildet, das in Richtung des anderen Ventilsitzes 5a bewegbar und durch ein Federelement 16 vorgespannt ist, um das Schieberelement 6 zwischen den Ventilsitzen 5a, 15a unter Druck zu halten und so eine gute Anlage der Ventilsitze 5a, 15a an dem Schieberelement 6 zu erreichen.

Durch die diametral gegenüberliegende Anordnung der beiden Verbindungsöffnungen 20, 21 wird gewährleistet, daß keine Druckdifferenzen zwischen den beiden Seiten des Schieberelements 6 vorhanden sind und die Reibungskräfte, die beim Durchströmen der Verbindungsöffnungen 20, 21 auftreten, sich gegenseitig aufheben.

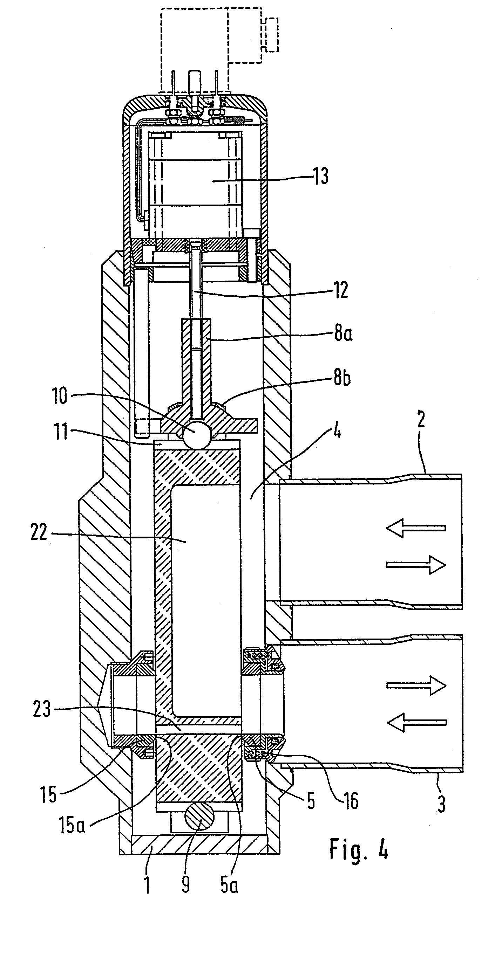

Figur 4 zeigt eine vierte Ausführungsform einer Ventilanordnung gemäß der vorliegenden Erfindung. Zu dieser Ventilanordnung gehört ein Ventilgehäuse 1, in dem ein in einem Rahmen 8 beweglich angeordnetes Schieberelement 6 durch einen Antrieb 13 verstellbar angeordnet ist. Die Ausbildung des Rahmens 8 und die Halterung des Schieberelements 6 in dem Rahmen 8 sind genauso wie bei der zuvor in Zusammenhang mit Figur 3 beschriebenen dritten Ausführungsform einer Ventilanordnung.

Bei der in Figur 4 gezeigten Ventilanordnung sind der erste Druckmittelanschluß 2 und der zweite Druckmittelanschluß 3 in der Verstellrichtung des Schieberelements 6 gesehen nebeneinanderliegend an dem Ventilgehäuse 1 angeordnet, und das Schieberelement 6 weist eine einen Strömungskanal definierende Ausnehmung 22 auf, die zu den Druckmittelanschlüssen 2, 3 hin offen ist. Außerdem ist in dem Schieberelement 6 eine sich quer zu der Anlagefläche 6a des Schieberelements 6 erstreckende Drosselöffnung 23 kleinen Durchmessers vorgesehen, durch welche Druckausgleich zwischen der Vorderseite und der Rückseite des Schieberelements 6 stattfinden kann, auch wenn das Schieberelement 6 aus der in Figur 4 dargestellten Lage in seine geschlossene Stellung nach oben hin verstellt wird, in der die Ausnehmung 22 des Schieberelements 6 nicht mehr im Bereich des zweiten Druckmittelanschlusses 3 liegt und nur noch die Drosselöffnung 23 eine Verbindung zwischen dem ersten und zweiten Druckmittelanschluß 2, 3 herstellt.

Bei den erfindungsgemäßen Ventilanordnungen bilden die Schieberelemente mit den Rahmen vormontierbare Einheiten, die auf einfache Weise ausgewechselt werden können.

Die freie Verstellbarkeit des Schieberelements gegenüber dem Rahmen gewährleistet dabei, daß das Schieberelement immer in seine korrekte Position und Lage gegenüber dem Ventilsitz gebracht werden kann. Durch die Verwendung eines in Richtung des Ventilsitzes vorgespannten Führungselements wird hierbei automatisch eine richtige Positionierung des Schieberelements erreicht.

## Patentansprüche

1. Ventilanordnung, insbesondere elektronische Expansionsventilanordnung, für pneumatische oder hydraulische Druckmittel mit einem Ventilgehäuse (1), das einen ersten und einen zweiten Druckmittelanschluß (2, 3) aufweist, die miteinander durch einen in einem Gehäusehohlraum gebildeten Durchflußraum (4) verbunden sind, und einem im Ventilgehäuse (1) angeordneten und mit einem Ventilsitz (5a) zusammenwirkenden Schieberelement (6), wobei das Schieberelement (6) mit einem Stellelement (12) eines Antriebs (13) wirkverbunden und parallel zu dem Ventilsitz (5a) zwischen einer Schließstellung, in der eine Anlagefläche (6a) des Schieberelements (6) eine von dem Ventilsitz (5a) gebildete Durchflußöffnung (7) verschließt, und einer Öffnungsstellung, in der ein in dem Schieberelement (6) ausgebildeter Durchflußkanal (6b) die Durchflußöffnung (7) freigibt, verschiebbar geführt ist, und wobei das Schieberelement (6) in Richtung des Ventilsitzes (5a) und zurück verschiebbar ist,
dadurch **gekennzeichnet,**
daß das Schieberelement (6) in einem an dem Stellelement (12) angebrachten oder gehaltenen Rahmen (8) angeordnet und gegenüber dem Rahmen (8) um wenigstens zwei Achsen (A, B) kippbar ist.

2. Ventilanordnung nach Anspruch 1,
dadurch **gekennzeichnet,**
daß wenigstens ein Druckfederelement (14) in dem Ventilgehäuse (1) vorgesehen ist, das den Rahmen (8) in Richtung des Stellelements (12) vorspannt und an dem Stellelement (12) hält.

3. Ventilanordnung nach Anspruch 1,
dadurch **gekennzeichnet,**
daß der Rahmen (8) ein mit dem Verstellelement (12) des Antriebs (13) verbundenes erstes Rahmenteil (8a) und ein an dem ersten Rahmenteil (8a) angebrachtes zweites Rahmenteil (8b) aufweist und daß das Schieberelement (6) sich an beiden Rahmenteilen (8a, 8b) abstützt und zwischen diesen gehalten ist.

4. Ventilanordnung nach einem der Ansprüche 1 bis 3,
dadurch **gekennzeichnet,**
daß der Rahmen (8) zumindest bereichsweise aus einem elastischen Material besteht und das Schieberelement (6) in dem Rahmen (8) durch die Federkraft des elastischen Materials gehalten ist.

5. Ventilanordnung nach Anspruch 3,
dadurch **gekennzeichnet,**
daß das zweite Rahmenteil (8b) gegenüber dem ersten Rahmenteil (8a) in Verstellrichtung des Schieberelements (6) bewegbar geführt ist, und daß zwischen den Rahmenteilen (8a, 8b) ein Federelement (17) vorgesehen ist, welches das zweite Rahmenteil (8b) in Richtung des Stellelements (12) vorspannt, um durch die Federkraft des Federelements (17) das Schieberelement (6) zwischen den menteilen (8a, 8b) zu halten.

6. Ventilanordnung nach einem der Ansprüche 1 bis 5,
dadurch **gekennzeichnet,**
daß das Schieberelement (6) in dem Rahmen (8) an seinen in der Verstellrichtung des Schieberelements (6) gegenüberliegenden Seiten durch Wälzkörper (9, 10) oder Gleitelemente gelagert und geführt ist.

7. Ventilanordnung nach Anspruch 6,
dadurch **gekennzeichnet,**
daß die Wälzkörper (9, 10) Kugeln oder Rollen sind.

8. Ventilanordnung nach einem der Ansprüche 1 bis 7,
dadurch **gekennzeichnet,**
daß das Schieberelement (6) zwischen dem Ventilsitz (5a) und einem in dem Ventilgehäuse (1) dem Ventilsitz (5a) gegenüberliegend angeordneten Führungselement (15) geführt ist.

9. Ventilanordnung nach Anspruch 8,
dadurch **gekennzeichnet,**
daß das Führungselement (15) in Richtung des Ventilsitzes (5a) bewegbar und durch ein ortsfest an dem Ventilgehäuse (1) angeordnetes Federelement (16) in Richtung des Ventilsitzes (5a) vorgespannt ist und das Schieberelement (6) gegen den Ventilsitz (8a) drückt.

10. Ventilanordnung nach Anspruch 8,
dadurch **gekennzeichnet,**
daß der Ventilsitz (5a) an einem in Richtung des Führungselements (15) bewegbaren Ventilsitzelement (5) ausgebildet ist und daß das Ventilsitzelement (5) durch ein ortsfest am Ventilgehäuse (1) angeordnetes Federelement (16) in Richtung des Führungselements (15) vorgespannt ist und das Schieberelement (6) gegen das Führungselement (16) drückt.

11. Ventilanordnung nach einem der Ansprüche 8 bis 10,
dadurch **gekennzeichnet,**
daß die Druckmittelanschlüsse (2, 3) diametral gegenüberliegend an dem Ventilgehäuse (1) vorgesehen sind und der Ventilsitz (5a) und das Führungselement (15) an den gehäuseseitigen Enden der Druckmittelanschlüsse (2, 3) vorgesehen sind und daß an dem Führungselement (15) ein weiterer mit dem Schieberelement (6) zusammenwirkender Ventilsitz ausgebildet ist.

12. Ventilanordnung nach einem der Ansprüche 8 bis 10,
dadurch **gekennzeichnet,**
daß die Druckmittelanschlüsse (2, 3) in Verstellrichtung des Schieberelements (6) versetzt an dem Ventilgehäuse (1) vorgesehen sind und daß zwischen dem ersten Druckmittelanschluß (2) und dem Durchflußraum (4) in dem Ventilgehäuse (1) ein den Durchflußraum (4) umgebender Ringraum (19) ausgebildet ist, der mit dem Durchflußraum (4) durch zwei einander diametral gegenüberliegende Verbindungsöffnungen (20, 21) verbunden ist, daß der Ventilsitz (5a) und das Führungselement (15) an den dungsöffnungen (20, 21) vorgesehen sind und daß an dem Führungselement (15) ein weiterer mit dem Schieberelement (6) zusammenwirkender Ventilsitz ausgebildet ist.

13. Ventilanordnung nach einem der Ansprüche 8 bis 12,
dadurch **gekennzeichnet,**
daß das Führungselement (15) aus einem chemisch resistenten Material mit hohen Gleiteigenschaften und einem hohen Abriebswiderstand besteht.

14. Ventilvorrichtung nach einem der Ansprüche 1 bis 13,
dadurch **gekennzeichnet,**
daß der Ventilsitz (5a) an einem am Ventilgehäuse angeordneten Ventilsitzelement (5) ausgebildet ist und das Ventilsitzelement (5) aus einem chemisch resistenten Material mit hohen Gleiteigenschaften und einem hohen Abriebswiderstand besteht.

15. Ventilanordnung nach einem der Ansprüche 13 oder 14,
dadurch **gekennzeichnet,**
daß das Führungselement (15) und / oder das Ventilsitzelement (5) aus einem Keramikmaterial besteht.

16. Ventilanordnung nach einem der vorhergehenden Ansprüche,
dadurch **gekennzeichnet,**
daß das Schieberelement (6) aus einem chemisch resistenten Material mit hohen Gleiteigenschaften und einem hohen Abriebswiderstand besteht.

17. Ventilanordnung nach Anspruch 16,
dadurch **gekennzeichnet,**
daß das Schieberelement (6) aus Keramikmaterial besteht.

18. Ventilanordnung nach einem der vorhergehenden Ansprüche,
dadurch **gekennzeichnet,**
daß in dem Schieberelement (6) eine Drosselöffnung (23) vorgesehen ist, durch welche der zweite Druckmittelanschluß (3) unabhängig von einem vom Ventilsitz (5a) und dem Schieberelement (6) gebildeten Dichtsitz mit einem dem Druckmittelanschluß (3) gegenüberliegenden geschlossenen Raum verbindbar sind.

## Claims

1. Valve arrangement, in particular electronic expansion valve arrangement, for pneumatic or hydraulic pressure media, comprising a valve housing (1) having first and second pressure medium connections (2, 3) which are connected to one another by a throughflow space (4) formed in a housing cavity and a slider element (6) arranged in the valve housing (1) and co-operating with a valve seat (5a), wherein the slider element (6) is operatively connected to a positioning element (12) of a drive (13) and is displaceably guided parallel to the valve seat (5a) between a closed position in which a contact surface (6a) of the slider element (6) closes a throughflow opening (7) formed by the valve seat (5a) and an open position in which a throughflow passage (6b) formed in the slider element (6) frees the throughflow opening (7), and wherein the slider element (6) is displaceable in the direction of the valve seat (5a) and back, characterised in that the slider element (6) is arranged in a frame (8) mounted or held on the positioning element (12) and is tiltable relative to the frame (8) about at least 2 axes (A, B).

2. Valve arrangement in accordance with claim 1, characterised in that at least one compression spring element (14) is provided in the valve housing (1), biases the frame (8) in the direction of the positioning element (12) and holds the frame (8) against the positioning element (12).

3. Valve arrangement in accordance with claim 1, characterised in that the frame (8) has a first frame part (8a) connected to the adjustment element (12) of the drive (13) and a second frame part (8b) mounted on the first frame part (8a); and in that the slider element (6) is braced against the two frame parts (8a, 8b) and held between them.

4. Valve arrangement in accordance with one of the claims 1 to 3, characterised in that the frame (8) consists at least regionally of a resilient material and the slider element (6) is held in the frame (8) by the spring force of the resilient material.

5. Valve arrangement in accordance with claim 3, characterised in that the second frame part (8b) is moveably guided relative to the first frame part (8a) in the adjustment direction of the slider element (6), and in that a spring element (17) is provided between the frame parts (8a, 8b) which biases the second frame part (8b) in the direction of the positioning element (12) in order to maintain the slider element (6) between the frame parts (8a, 8b) by the spring force of the spring element (17).

6. Valve arrangement in accordance with one of the claims 1 to 5, characterised in that the slider element (6) is mounted and guided in the frame (8) at its opposite sides in the adjustment direction of the slider element (6) by rolling elements (9, 10) or sliding elements.

7. Valve arrangement in accordance with claim 6, characterised in that the rolling elements (9, 10) are balls or rollers.

8. Valve arrangement in accordance with one of the claims 1 to 7, characterised in that the slider element (6) is guided between the valve seat (5a) and a guide element (15) arranged in the valve housing (1) opposite to the valve seat (5a).

9. Valve arrangement in accordance with claim 8, characterised in that the guide element (15) is movable in the direction of the valve seat (5a) and is biased in the direction of the valve seat (5a) by a spring element (16) arranged in a fixed position at the valve housing (1) and presses the slider element (6) against the valve seat (8a).

10. Valve arrangement in accordance with claim 8, characterised in that the valve seat (5a) is formed on a valve seat element (5) movable in the direction of the guide element (15), and in that the valve seat element (5) is biased in the direction of the guide element (15) by a spring element (16) of fixed position arranged at the valve housing (1) and presses the slider element (6) against the guide element (16).

11. Valve arrangement in accordance with one of the claims 8 to 10, characterised in that the pressure medium connections (2, 3) are diametrically oppositely disposed on the valve housing (1) and the valve seat (5a) and the guide element (15) are provided at the housing side ends of the pressure medium connections (2, 3), and in that a further valve seat co-operating with the slider element (6) is formed at the guide element (15).

12. Valve arrangement in accordance with one of the claims 8 to 10, characterised in that the pressure medium connections (2, 3) are arranged displaced on the valve housing (1) in the adjustment direction of the slider element (6), and in that a ring space (19) is formed between the first pressure medium connection (2) and the throughflow space (4) in the valve housing (1) surrounding the throughflow space (4) and is connected to the throughflow space (4) by two diametrically oppositely disposed connection openings (20, 21); in that the valve seat (5a) and the guide element (15) are provided at the connection openings (20, 21); and in that a further valve seat co-operating with the slider element (6) is formed at the guide element (15).

13. Valve arrangement in accordance with one of the claims 8 to 12, characterised in that the guide element (15) consists of a chemically resistant material with good sliding characteristics and a high resistance to wear.

14. Valve arrangement in accordance with one of the claims 1 to 13, characterised in that the valve seat (5a) is formed on a valve seat element (5) arranged at the valve housing and the valve seat element (5) consists of a chemically resistant material with good sliding characteristics and a high resistance to wear.

15. Valve arrangement in accordance with one of the claims 13 or 14, characterised in that the guide element (15) and/or the valve seat element (5) consist of a ceramic material.

16. Valve arrangement in accordance with one of the preceding claims, characterised in that the slider element (6) consists of a chemically resistant material with good sliding characteristics and a high resistance to wear.

17. Valve arrangement in accordance with claim 16, characterised in that the slider element (6) consists of ceramic material.

18. Valve arrangement in accordance with one of the preceding claims, characterised in that there is provided in the slider element (6) a restrictor opening (23) through which the second pressure medium connection (3) can be connected to a closed space lying opposite to the pressure medium connection (3) independently of a sealed seat formed by the valve seat (5a) and the slider element (6).

## Revendications

1. Dispositif de vanne, en particulier à un dispositif de vanne de détente électronique pour milieux de pression pneumatiques ou hydrauliques, comprenant un corps de vanne (1) qui présente un premier et un deuxième raccords (2, 3) de milieu de pression qui sont reliés l'un à l'autre par une chambre de passage (4) formée dans une cavité de corps, et un obturateur coulissant (6) disposé dans le corps de vanne (1) et qui coopère avec un siège de vanne (5a), l'obturateur coulissant (6) étant relié fonctionnellement à un élément actionneur (12) d'un entraînement (13) et étant guidé mobile en translation parallèlement au siège de vanne (5a) entre une position de fermeture, dans laquelle une surface de contact (6a) de l'obturateur coulissant (6) obture une ouverture de passage (7) formée par le siège de vanne (5a), et une position d'ouverture, dans laquelle un canal de passage (6b) formé dans l'obturateur coulissant (6) libère l'ouverture de passage (7), et l'obturateur coulissant (6) pouvant se déplacer en translation en direction du siège de vanne (5a) et en sens inverse,
caractérisé
en ce que l'obturateur coulissant (6) est agencé dans un cadre (8) monté ou retenu sur l'élément actionneur (12) et peut basculer par rapport au cadre (8) autour d'au moins deux axes (A, B).

2. Dispositif de vanne selon la revendication 1,
caractérisé
en ce qu'il est prévu dans le corps de vanne (1), au moins un élément de ressort de compression (14) qui maintient le cadre (8) précontraint en direction de l'élément actionneur (12) et qui le maintient contre l'élément actionneur (12).

3. Dispositif de vanne selon la revendication 1,
caractérisé
en ce que le cadre (8) comprend une première partie de cadre (8a) reliée à l'élément actionneur (12) de l'entraînement (13) et une deuxième partie de cadre (8b) agencée sur la première partie de cadre (8a), et en ce que l'obturateur coulissant (6) prend appui sur les deux parties de cadre (8a, 8b) et est tenu entre celles-ci.

4. Dispositif de vanne selon une des revendications 1 à 3,
caractérisé
en ce que le cadre (8) est constitué, au moins par zones, par une matière élastique et l'obturateur coulissant (6) est tenu dans le cadre (8) par la force élastique de la matière élastique.

5. Dispositif de vanne selon la revendication 3,
caractérisé
en ce que la deuxième partie de cadre (8b) est guidée mobile par rapport à la première partie de cadre (8a) dans la direction de déplacement de l'obturateur coulissant (6) et en ce qu'il est prévu entre les parties de cadre (8a, 8b) un élément à ressort (17) qui sollicite la deuxième partie de cadre (8b) en direction de l'élément actionneur (12) avec précontrainte pour maintenir l'obturateur coulissant (6) entre les parties de cadre (8a, 8b) sous l'action de la force élastique de l'élément à ressort (17).

6. Dispositif de vanne selon une des revendications 1 à 5,
caractérisé
en ce que l'obturateur coulissant (6) est articulé et guidé dans le cadre (8), sur ses côtés mutuellement opposés dans la direction du déplacement de l'obturateur coulissant (6), par des corps roulants (9, 10) ou des éléments glissants.

7. Dispositif de vanne selon la revendication 6,
caractérisé
en ce que les corps roulants (9, 10) sont des billes ou des rouleaux.

8. Dispositif de vanne selon une des revendications 1 à 7,
caractérisé
en ce que l'obturateur coulissant (6) est guidé entre le siège de vanne (5a) et un élément de guidage (15) disposé dans le corps de vanne (1) à l'opposé du siège de vanne (5a).

9. Dispositif de vanne selon la revendication 8,
caractérisé
en ce que l'élément de guidage (15) est mobile en direction du siège de vanne (5a) et est précontraint en direction du siège de vanne (5a) sur un élément à ressort (16) disposé en position fixe dans le corps de vanne (1) et presse l'obturateur coulissant (6) contre le siège de vanne (8a).

10. Dispositif de vanne selon la revendication 8,
caractérisé
en ce que le siège de vanne (5a) est formé sur un élément de siège de vanne (5) mobile en direction de l'élément de guidage (15) et en ce que l'élément de siège de vanne (5) est précontraint en direction de l'élément de guidage (15) par un élément à ressort (16) disposé en position fixe sur le corps de vanne (1) et presse l'obturateur coulissant (6) contre l'élément de guidage (16).

11. Dispositif de vanne selon une des revendications 8 à 10,
caractérisé
en ce que les raccords de milieu de pression (2, 3) sont prévus sur le corps de vanne (1) dans des positions diamétralement opposées et le siège de vanne (5a) et l'élément de guidage (5) sont prévus aux extrémités côté corps des raccords de milieu de pression (2, 3) et en ce que, sur l'élément de guidage (15) est formé un autre siège de vanne qui coopère avec l'obturateur coulissant (6).

12. Dispositif de vanne selon une des revendications 8 à 10,
caractérisé
en ce que les raccords de milieu de pression (2, 3) sont prévus sur le corps de vanne (1) dans des positions décalées dans la direction de déplacement de l'obturateur coulissant (6) et en ce que, entre le premier raccord de milieu de pression (2) et la chambre de passage (4), est formée dans le corps de vanne (1) une chambre annulaire (19) qui entoure la chambre de passage (4) et qui est reliée à la chambre de passage (4) par deux ouvertures de liaison (20, 21) diamétralement opposées l'une à l'autre, en ce que le siège de vanne (5a) et l'élément de guidage (15) sont prévus aux ouvertures de liaison (20, 21) et en ce que, sur l'élément de guidage (15), est formé un autre siège de vanne qui coopère avec l'obturateur coulissant (6).

13. Dispositif de vanne selon une des revendications 8 à 12,
caractérisé
en ce que l'élément de guidage (15) est composé d'une matière résistante aux agents chimiques, possédant de hautes propriétés de glissement et une haute résistance à l'abrasion.

14. Dispositif de vanne de selon une des revendications 1 à 13,
caractérisé
en ce que le siège de vanne (5a) est formé sur un élément de siège de vanne (5) agencé sur le corps de vanne et l'élément de siège de vanne (5) est composé d'une matière résistante aux agents chimiques, qui possède de hautes propriétés de glissement et une haute résistance à l'abrasion.

15. Dispositif de vanne selon une des revendications 13 ou 14,
caractérisé
en ce que l'élément de guidage (15) et/ou l'élément de siège de vanne (5) sont composés d'une matière céramique.

16. Dispositif de vanne selon une des revendications précédentes,
caractérisé
en ce que l'obturateur coulissant (6) est composé d'une matière résistante aux agents chimiques, possédant de hautes propriétés de glissement et une haute résistance à l'abrasion.

17. Dispositif de vanne selon la revendication 16,
caractérisé
en ce que l'obturateur coulissant (6) est fait d'une matière céramique.

18. Dispositif de vanne selon une des revendications précédentes,
caractérisé
en ce que, dans l'obturateur coulissant (6), est prévue une ouverture d'étranglement (23) à travers laquelle le deuxième raccord de milieu de pression (3) peut être relié à une chambre fermée qui est à l'opposé du raccord de milieu de pression (3) indépendamment d'un appui étanche formé par le siège de vanne (5a) et par l'obturateur coulissant (6).
